# EUROPEAN PATENT APPLICATION

(11) **EP 4 131 040 A1**
(43) Date of publication of application: **08.02.2023**
(21) Application number: 21306086.6
(22) Date of filing: 03.08.2021
(51) Int. Cl.: G06F 21/51, G06F 21/53

(54) **METHOD FOR SECURELY PULLING A SIGNED CONTAINER IMAGE**

(71) Applicant: Thales Dis France SAS, 92190 Meudon (FR)
(72) Inventor: FOKLE KOKOU, Milas, 92190 Meudon (FR)
(74) Representative: Bricks, Amélie

(57) **Abstract**

The present invention relates to a method for generating a signed container image from a base container image comprising a plurality of container image layers, and for pushing said signed container image to an image registry of a container hosting environment,
wherein said environment comprises a pipeline server of an image provider, a master node configured for acting as orchestrator and a plurality of worker nodes configured for running a container instantiating said signed container image after pulling said signed container image from said image registry,
and comprising performed by said pipeline server:
- generating a signed container image by adding a first layer and a second layer to said base container image, said first layer comprising a manifest of said base container image and said second layer comprising a digital signature of a digest of said manifest generated using a private key of said image provider,
- pushing said signed container image to said image registry.

## Description

### FIELD OF THE INVENTION

The present invention relates to software containers and more particularly to a method of authentication of an image container.

### BACKGROUND OF THE INVENTION

Software containers are efficient means to deploy on a computing device, called worker node, an instance of one or more applications. Software containers are therefore widely used for deploying an execution environment on a distant server such as a cloud service. Virtualization can be performed very easily using software containers by deploying on a single node several containers that are isolated from each other.

Software containers are made available to workers nodes as container images to be instantiated by a worker node for running the container. Such container images are stored in a registry, from which a worker node should pull a software container image in order to run it.

An attacker gaining access to such a registry may fraudulently replace a container image by a corrupted image which would, when executed by a worker node, enable him to perform malicious actions on the node, such as accessing private data handled by the node or gaining high privileges enabling him to control the node. Such a risk is particularly high in the case of public registries or cloud registries accessible from the Internet.

In order to prevent such attacks, existing container based computation frameworks provide solutions enabling worker nodes to verify the authenticity of a container image when pulling it from a registry before executing it. In such solutions, container images are signed by the image owner or provider using its private key and worker nodes can verify the signature of a container image using a corresponding public key certificate, thereby getting a proof of the authenticity and integrity of the container image.

Such signature-based solutions nevertheless have several drawbacks. First, they require maintaining in the container hosting environment a second registry for storing the signatures of the container images and making it available to worker nodes. Secondly, the signature of a container image is usually generated by encrypting with a private key a digest of the manifest of the image, which describes the content of the image. Such a way of signing images is effective since the manifest of an image will change after any alteration of the image content. Nevertheless, the manifest of an image will also change when the image is moved from one repository to another. As a result, the signature of an image is specific to the repository hosting the image, and when an image is pushed to a new repository its signature must be updated in order to remain verifiable by the working nodes. It may require a lot of computations, particularly in the case of a massive deployment of multiple images to a new registry, for example in a cloud based container hosting environment. It also makes more complex the management of container images for image providers since a different signature must be managed for each different registry storing a given image.

As a result, there is a need for a method enabling to verify the authenticity and integrity of container images stored in a registry with a lower computational and storage footprint than existing container-based solutions.

### SUMMARY OF THE INVENTION

For this purpose and according to a first aspect, this invention therefore relates to a method for generating a signed container image from a base container image comprising a plurality of container image layers, and for pushing said signed container image to an image registry of a container hosting environment,
wherein said environment comprises a pipeline server of an image provider, a master node configured for acting as orchestrator and a plurality of worker nodes configured for running a container instantiating said signed container image after pulling said signed container image from said image registry,
and comprising performed by said pipeline server:
   - generating a signed container image by adding a first layer and a second layer to said base container image, said first layer comprising a manifest of said base container image and said second layer comprising a digital signature of a digest of said manifest generated using a private key of said image provider,
   - pushing said signed container image to said image registry.

By doing so, the authenticity and integrity of an image can be verified at any time from the data carried within the image without need of maintaining a separate registry for storing the signatures of the container images. In addition, the authenticity of the container image can be verified independently of the registry hosting the signed image. Such a signature method does not require anymore to update signatures in order to make them correspond to the registry in which the signed image is stored.

According to a second aspect, this invention relates to method for securely pulling, to a worker node of a container hosting environment from an image registry, a signed container image generated and pushed to said image registry according to the method according to the first aspect, and comprising, performed by an image signature verification node :
- verifying the signature of said digest of said manifest comprised in the second layer of the signed container image,
- verifying the integrity of said signed container image based on said manifest comprised in the first layer of the signed container image,
- when verification of said signature and said integrity is successful, notifying the master node such that it allows the worker node to pull said signed container image.

Such verifications enable to prove the authenticity of the manifest comprised in the signed image, and the integrity in the signed image of the base container image corresponding to this manifest.

The step of verifying the signature may comprise:
- obtaining a decrypted digest by decrypting said signature of said digest of said manifest comprised in the second layer of the signed container image using a public key corresponding to said secret key of the image provider,
- computing a digest of said manifest comprised in the first layer of the signed container image,
- comparing said decrypted digest with said computed digest.

The step of verifying the integrity of said signed container image may comprise : comparing, for each layer of the manifest comprised in the first layer of the signed container image, a digest associated to said layer in said manifest with a digest associated to a corresponding layer in a manifest of the signed container image.

It enables to prove that the layers 3 and more of the signed image are indeed the original layers of the base container image corresponding to the manifest whose authenticity is ascertained by the verification of the signature.

The step of verifying the signature may comprise verifying that the first and second layers of the signed container image each contain a single file.

It enables to prevent any attack based on reusing a genuine signed image and injecting malicious code in an existing layer of this image.

According to a second aspect, this invention relates to a computer program product directly loadable into the memory of at least one computer, comprising software code instructions for performing the steps of the method according to the first and second aspect of the invention when said product is run on the computer.

According to a third aspect, this invention relates to an image signature verification node comprising a processor, a memory and an input-output interface, said processor, said memory and said input-output interface being configured to perform the steps of the method according to the second aspect of the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of a container hosting environment according to the present invention;
- Figure 2 is a schematic illustration of a worker node according to the present invention;
- Figure 3 is a schematic illustration of the steps of methods for generating a signed container image from a base container image comprising a plurality of container image layers, and for pushing said signed container image to the image registry of a container hosting environment according to an embodiment of the present invention;
- Figure 4a is a schematic illustration of an exemplary content of a base container image and Figure 4b is a schematic illustration of an exemplary content of a signed container image according to an embodiment of the present invention.

### DETAILED DESCRIPTION OF EMBODIMENTS OF THE INVENTION

The invention relates to a method for generating a signed container image from a base container image and for pushing to an image registry of a container hosting environment.

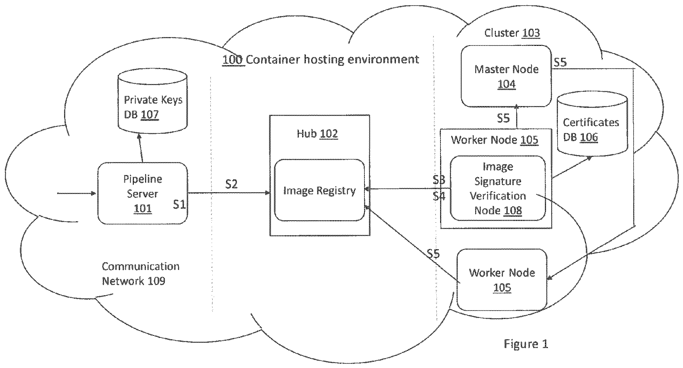

**Figure 1** shows such a container hosting environment 100. It comprises a pipeline server 101 of an image provider, in charge of building and signing container images, a hub 102 hosting an image registry, in charge of storing container images offered to users in the container hosting environment, and a cluster 103. The hub 102 and the pipeline server 101 may be included in a single physical device or may be two separate devices. The cluster comprises a plurality of worker nodes 105 configured for running containers instantiated from the container images stored in the image registry and a master node 104 playing the role of orchestrator for the container hosting environment and managing the deployment of container images on the worker nodes. Such a cluster may be part of a cloud architecture used to provide cloud computation services to customers.

As described below, the images stored in the registry are signed using a private key, and the security of the execution of containers by the worker nodes is ensured by an authentication of the container images before their execution. As a result, the pipeline server may be connected to a private key database 107 and the cluster 103 may also comprise a certificate database 106 storing public key certificates required to verify the signature of the signed container images. It may also comprise an image signature verification node 108 in charge of performing such a verification. This image signature verification node 108 may be one of the worker nodes 105, or a dedicated node.

The pipeline server, the hub and the elements of the cluster 103 are all interconnected by a communication network 109.

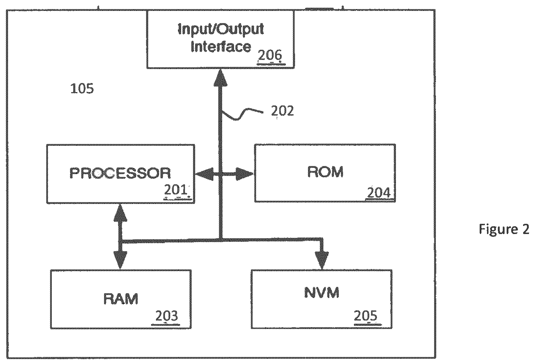

**Figure 2** is a schematic illustration of a worker node. It may include a processor 201 connected via a bus 202 to a random access memory (RAM) 203, a read-only memory (ROM) 204, and/or a non-volatile memory (NVM) 205. It may further include communication interface by which the central registry may be connected to the communication network 109. Such an interface may be a wired interface such as an Ethernet interface. Alternatively, it may be a wireless interface used to connect the node to various forms of wireless networks, e.g., wide-area networks, WiFi networks, or mobile telephony networks. The node may also include an input/output interface 206 providing interfaces to a user of the node, such as one or more screens, loudspeakers, a mouse, tactile surfaces, a keyboard etc...

Such a node may for example be a personal computer or computer server. Such a computer or server may not be dedicated to its role in the frame of the system 100 and may perform other tasks in parallel, especially in the case of a shared remote server involved in cloud applications.

The pipeline server, the hub and the other nodes of the cluster may have the same structure and may comprise the same kind of components.

Each worker node 105 executes a container manager software, in charge of running instances of container images on the node and then managing these instances, called software containers, up to the end of their execution. Several instances of a single container image or of multiple different container images may run at the same time in parallel on the same node, all managed by the single container manager software of the node. They all share the same OS but remain isolated from one another

The master node executes an orchestrator software in charge of requesting to the container managers of the nodes 105 the deployment of instances of container images on these nodes.

For example, the orchestrator software may be Kubernetes, Docker Swarm or Apache Mesos and the container manager software may be Docker, GKE, CRIO or CoreOS rkt.

The main idea of the invention in order to lower the computational burden associated to signed container images is to make the signature of an image verifiable regardless of the modifications undergone by the manifest of the signed image that are not related to the content of the image layers. In order to do so, the manifest that is signed at the time of generation of a signature of an image is stored in an additional layer of the image. This manifest inserted in the image is stable over time. It is not affected as the current manifest of the signed image by the potential displacements of the image from one registry to another. Therefore, the signature of the manifest can be verified anytime, without the need to generate a new signature based on the actual manifest of the image. In order to complete the verification of the authenticity and integrity of the image, the signature verification must be followed by a verification that the content of the layers of the image has not changed since the time the image was signed. It can be done by comparing the digests associated to the image layers in the current manifest of the signed image and in the manifest stored in the image.

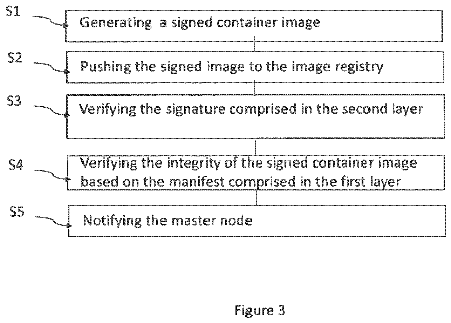

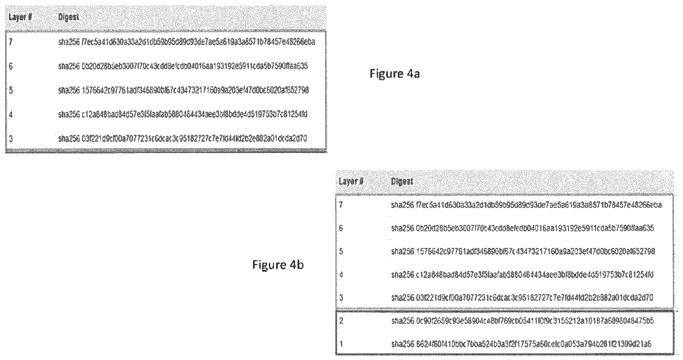

The following paragraphs describe, as illustrated on **Figure 3** **and** **Figure 1****,** the steps of a method for generating a signed container image from a base container image comprising a plurality of container image layers, and for pushing said signed container image to the image registry of a container hosting environment. An exemplary content of the base container image is given on **Figure 4a****.** In this example, the base container image comprises five layers. Figure 4a shows the digests associated to each of these layers in the manifest of the base container image.

During a generation step S1, the pipeline server generates a signed container image by adding a first layer and a second layer to the base container image, said first layer comprising a manifest of the base container image and said second layer comprising a digital signature of a digest of the manifest. **Figure 4b** shows an example of such a signed image obtained from the base container image shown on **Figure 4a****.** The layers of the base container image remain unchanged except for their renumbering starting at layer 3. Layer 1 contains the manifest of the base container image which stores the digest of these layers. And layer 2 stores the signature of the digest of the layer 1 manifest.

Such digests may for example be generated using any hash algorithm such as SHA256 or SHA-3.

The digital signature of the digest of the manifest is generated by encrypting it using a private key of the image provider and well known cryptographic algorithms such as RSA, DSA, ECDSA etc...

During a pushing step S2, the pipeline server then pushes the signed image to the image registry where it is stored.

As an example, the image provider owning the pipeline server may be service provider offering to clients various products and owning a different private key for each product. In such a case, the private key used for signing the manifest is selected according to the product for which the signed image is generated. Alternatively, the signed image may be generated for a particular client. In such a case, a dedicated private key may be associated to each client and the private key to be used for generating a signature may be selected according to the client for which the signed image is generated. Such a dedicated private key may either be generated and stored by the image provider or be generated by the client and transmitted to the pipeline server.

In order to enable the verification of signatures, a corresponding public key may be associated to each private key, forming a public-private key pair, and a certificate of the public key may be available. Such certificates may be stored in the certificate database 106. They may be generated and managed using a system based on the web of trust model, such as PGP, or using a Public Key Infrastructure (PKI) relying on a certification authority, such as X509 certificates.

By doing so, the signed container image becomes self-supporting: its authenticity and integrity can be verified at any time from the data carried within the image. It removes the need from maintaining a separate registry for storing the signatures of the container images. In addition, the manifest needed to verify the signature and bound to the base image in the signed container image remains the same as the signed image is moved from one registry to another. As a result, the authenticity of the container image can be verified independently of the registry hosting the signed image. Such a signature method does not require anymore to update signatures in order to make them correspond to the registry in which the signed image is stored.

The following paragraphs describe, as illustrated on **Figure 3****,** the steps of a method for securely pulling such a signed container image from the image registry to a worker node of the container hosting environment, including a verification of the integrity and authenticity of the signed image.

In a first verification step S3, the image signature verification node may verify the signature comprised in the second layer of the signed container image. In order to do so, it may :
- verifying that the first and second layers of the signed container image each contain a single file,
- obtain a decrypted digest by decrypting the signature comprised in the second layer of the signed container image using a public key corresponding to the secret key of the image provider used to generate the signature. Such a public key may be securely obtained using a corresponding public key certificate,
- compute a digest of the manifest comprised in the first layer of the signed container image,
- compare said decrypted digest with said computed digest.
When both digests match, it is proof that the manifest included in the first layer has not been tampered with and really is the manifest of the base container image from which the signed container image has been generated, at the time of this generation. Nevertheless, such a signature verification is not enough for proving the integrity of the rest of the signed image, particularly the layers corresponding to the base container image.

In a second verification step S4, the image signature verification node may verify the integrity of the signed container image based on the manifest comprised in the first layer of the signed container image. In order to do so, it may compare, for each layer of the manifest comprised in the first layer of the signed container image, a digest associated to this layer in this manifest with a digest associated to a corresponding layer in the manifest of the signed container image. If the layers 3 and more of the signed image contain the same data as the layers of the base container image from which the signed image has been generated, there should be a one to one correspondence between the layers 3 and more of the signed image and the layers of the base container image. In such a case, even if the manifest of the signed container image is not identical to the manifest of the base container image comprised in the first layer of the signed image because contextual data such as the registry name have changed, both manifests should indicate the same digests for these layers.

In a third verification step S5, when verification of said signature and said integrity is successful, the image signature verification node may notify the master node about the status of the signature verification such that the orchestrator allows the worker node to pull the signed container image for instantiating the container.

According to a second aspect, the invention relates to a computer program product directly loadable into the memory of at least one computer, comprising software code instructions for performing, when said product is run on the computer, the steps of the method described here before.

According to a third aspect, the invention relates to an image signature verification node comprising a processor, a memory and an input-output interface, said processor, said memory and said input-output interface being configured to perform the steps of the method described here before.

Therefore, the proposed methods and systems enable to verify the authenticity and integrity of a container image stored in a registry, based only on the content of this image, which lowers the storage footprint of the system since no registry is needed for storing signatures. In addition, such signatures can be verified independently of the registry storing the signed image, which suppresses the generate signatures corresponding to the registry storing the signatures and to update signatures at each displacement of an image from one registry to another.

## Claims

1. A method for generating a signed container image from a base container image comprising a plurality of container image layers, and for pushing said signed container image to an image registry (102) of a container hosting environment (100),
wherein said environment comprises a pipeline server (101) of an image provider, a master node (104) configured for acting as orchestrator and a plurality of worker nodes (105) configured for running a container instantiating said signed container image after pulling said signed container image from said image registry,
and comprising performed by said pipeline server:
- generating (S1) a signed container image by adding a first layer and a second layer to said base container image, said first layer comprising a manifest of said base container image and said second layer comprising a digital signature of a digest of said manifest generated using a private key of said image provider,
- pushing (S2) said signed container image to said image registry.

2. A method for securely pulling, to a worker node (105) of a container hosting environment (100) from an image registry (102), a signed container image generated and pushed to said image registry according to claim 1, and comprising, performed by an image signature verification node (108) :
- verifying (S3) the signature of said digest of said manifest comprised in the second layer of the signed container image,
- verifying (S4) the integrity of said signed container image based on said manifest comprised in the first layer of the signed container image,
- when verification of said signature and said integrity is successful, notifying (S5) the master node such that it allows the worker node to pull said signed container image.

3. The method of claim 2, wherein verifying (S3) the signature comprises:
- obtaining a decrypted digest by decrypting said signature of said digest of said manifest comprised in the second layer of the signed container image using a public key corresponding to said secret key of the image provider,
- computing a digest of said manifest comprised in the first layer of the signed container image,
- comparing said decrypted digest with said computed digest.

4. The method of claim 2 or 3, wherein verifying (S4) the integrity of said signed container image comprises : comparing, for each layer of the manifest comprised in the first layer of the signed container image, a digest associated to said layer in said manifest with a digest associated to a corresponding layer in a manifest of the signed container image.

5. The method of any one of claims 2 to 4, wherein verifying (S3) the signature comprises verifying that the first and second layers of the signed container image each contain a single file.

6. A computer program product directly loadable into the memory of at least one computer, comprising software code instructions for performing the steps of any one of claims 1 to 5 when said product is run on the computer.

7. An image signature verification node (108) comprising a processor (201), a memory (203, 204, 205) and an input-output interface (206), said processor, said memory and said input-output interface being configured to perform the steps of any one of claims 2 to 5.
